# FASCICULE DE BREVET EUROPEEN

(11) **EP 1 081 598 B1**
(45) Date de publication et mention de la délivrance du brevet: **14.04.2004**
(21) Numéro de dépôt: 00203009.6
(22) Date de dépôt: 29.08.2000
(51) Int. Cl.: G06F 13/16

(54) **Dispositif à plusieurs processeurs partageant une mémoire collective**
Gemeinsamen Speicher verteilende Multiprozessorvorrichtung
Multiprocessor device sharing a collective memory

(30) Priorité: 31.08.1999 FR 9910954
(43) Date de publication de la demande: 07.03.2001
(73) Titulaire: Koninklijke Philips Electronics N.V., 5621 BA Eindhoven (NL)
(72) Inventeur: de Perthuis, Hugues, 75008 Paris (FR); Mutz, Stéphane, 75008 Paris (FR); Nouvet, Thierry, 75008 Paris (FR)
(74) Mandataire: Charpail, François

(56) Documents cités:
- EP-A- 0 608 663
- WO-A-95/32578
- WO-A-97/06489
- US-A- 5 627 968

## Description

### DOMAINE TECHNIQUE

L'invention concerne un dispositif de traitement de données comprenant plusieurs processeurs qui partagent une mémoire collective. L'invention peut être appliquée, par exemple, dans un circuit intégré capable de décoder un flux de données MPEG (en anglais: Moving Picture Expert Group).

### ETAT DE LA TECHNIQUE ANTERIEURE

Le document WO 95/32578 décrit un décodeur MPEG. Le décodeur MPEG comprend une mémoire DRAM externe. Une unité de contrôle gère la mémoire DRAM externe et un bus bidirectionnel interne. Tous les transferts de données entre la mémoire DRAM externe et les différentes unités interne se font via se bus.

### EXPOSE DE L'INVENTION

Un but de l'invention est de permettre des implémentations à relativement faible coût, notamment en ce qui concerne des implémentations pour des traitements à vitesse élevée.

L'invention prend les aspects suivants en considération. Des communications de données entre un processeur en une mémoire se font en général via un bus. Pour assurer ces communications, le bus doit avoir une certaine bande passante en terme de nombre de bits par unité de temps. La vitesse à laquelle le processeur consomme et produit des données, respectivement en cas de lecture de la mémoire et en cas d'écriture dans la mémoire, détermine la bande passante nécessaire. Par exemple, un processeur qui traite des données vidéo en temps réel a besoin d'un bus ayant une bande passante relativement élevée.

La bande passante d'un bus dépend en principe de deux facteurs. Premièrement, la bande passante dépend des caractéristiques électriques des lignes qui constituent le bus. Par exemple, si une ligne a une capacité électrique importante, cette ligne ne pourrait que transférer un nombre de bits relativement faible par unité de temps. Deuxièmement, la bande passante dépend du nombre de lignes constituant le bus. Autrement dit, la bande passante dépend de la largeur du bus. Par exemple, si une ligne peut transférer 1 Mbit par seconde au maximum, un bus composé de 10 lignes (largeur = 10 bits) aura une bande passante de 10 Mbits par second. Un bus composé de 100 lignes (largeur = 100 bits) aura une bande passante de 100 Mbits par seconde.

Un schéma classique est d'utiliser un bus collectif via lequel différents processeurs peuvent accéder à une mémoire collective. Le document de l'art antérieur est un exemple de ceci. Comme le bus collectif relie différents processeurs à la mémoire collective, il aura en général une longueur relativement importante. Ceci implique que les lignes comprises dans ce bus auront des capacités relativement importantes. Donc, pour assurer une bande passante suffisante, le bus devra avoir une taille relativement importante notamment dans des applications à vitesse élevée comme par exemple un traitement vidéo. Un bus d'une taille importante est généralement coûteux notamment dans des implémentations à circuit intégré par ce que le bus prend relativement beaucoup de surface.

Selon l'invention telle que definie dans la revendication 1, un dispositif comprend:
- des bus privés, un bus privé permettant un transfert de données exclusivement entre un processeur et la mémoire collective; et
- une interface mémoire pour permettre l'accès à la mémoire collective en rafales de données tandis qu'elle produit des flux des données sensiblement réguliers sur les bus privés ayant une bande passante relativement faible.

Selon l'invention une méthode de traitement de données correspondante est définie dans la revendication 4 et un produit "programme d'ordinateur" dans la revendication 5.

Ceci permet d'optimiser la largeur de chaque bus privé: la largeur d'un bus privé est telle que la bande passante est justement suffisante pour le processeur concerné. Les bandes passantes des bus privés seront bien utilisées par ce que l'interface mémoire fait que ces bus transportent des flux de données sensiblement réguliers. En outre, comme un bus privé ne doit que relier un seul processeur à la mémoire collective, le bus sera relativement court. Par conséquent, une ligne du bus pourra transporter un nombre de bits relativement élevé par unité de temps. Ceci contribue à une largeur relativement faible du bus. Tous ces facteurs font que, dans nombreuses d'implémentations, l'ensemble des bus privés prendra moins de surface qu'un bus collectif comme dans l'art antérieur. Par conséquent, l'invention permet des implémentations a relativement faible coût.

L'invention et des caractéristiques additionnelles qui peuvent être utilisées avec avantage pour mettre en oeuvre l'invention, seront décrites ci-dessous plus en détail par référence à des figures.

### BREVE DESCRIPTION DES FIGURES

La Figure 1 illustre un dispositif de traitement de signaux selon l'invention;
La Figure 2 illustre le fonctionnement de l'interface mémoire du dispositif;
La Figure 3 illustre un bloc de traitement de signaux du dispositif;
La Figure 4 illustre l'interface mémoire du dispositif;
La Figure 5 illustre un accès en lecture d'un bloc;
La Figure 6a et 6b illustrent un arbitrage d'accès à une mémoire collective;
La Figure 7 illustre une interface d'accès de l'interface mémoire;
La Figure 8 illustre un dispositif de mémoire tampon de l'interface mémoire;
La Figure 9 illustre un dispositif de mémoire tampon pour lecture.

### MODES DE REALISATION DE L'INVENTION

Les remarques suivantes concernent les signes de référence. Des entités similaires sont désignées par une référence par lettres identiques dans toutes les figures. Plusieurs entités similaires peuvent apparaître dans une seule figure. Dans ce cas, un chiffre ou un suffixe est ajouté à la référence par lettres afin de distinguer entre des entités similaires. Le chiffre ou le suffixe peut être omis pour des raisons de convenance. Ceci s'applique pour la description ainsi que pour les revendications.

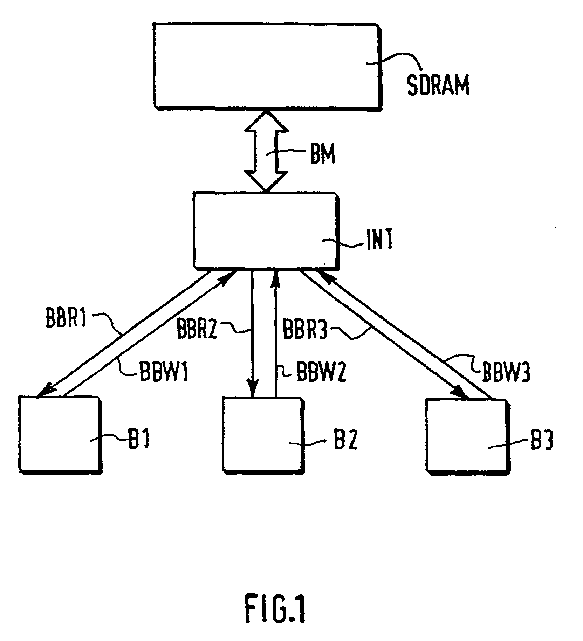

La Figure 1 illustre un dispositif de traitement de données. Le dispositif comprend une mémoire collective SDRAM, une interface mémoire INT et trois blocs de traitement de données B1, B2 et B3. Ces derniers seront nommés "bloc" dans le suivant. Chaque bloc B est relié à l'interface mémoire INT via un bus de lecture privé BBR et un bus d'écriture privé BBW. Chaque bus de lecture privé BBR et chaque bus d'écriture privé BBW est dédié à un certain bloc B. L'interface mémoire INT est reliée à la mémoire collective SDRAM via un bus collectif BM. Les blocs B, les bus de lecture privé BBR, les bus d'écriture privé BBW et l'interface mémoire INT peuvent faire partie d'un seul circuit intégré tandis que la mémoire collective SDRAM est un circuit externe.

Le dispositif de traitement de données fonctionne globalement comme suit. Les blocs B reçoivent sur demande des données à traiter stockées dans la mémoire collective SDRAM. Après avoir traité ces données, les blocs B envoient les données traitées vers la mémoire collective SDRAM via l'interface mémoire INT. L'interface mémoire INT régularise l'accès à la mémoire collective SDRAM par les différents blocs B.

L'interface mémoire INT a deux fonctions de base. Premièrement, elle effectue un arbitrage entre les différents blocs B au niveau d'accès à la mémoire collective SDRAM. Un seul bloc B peut accéder à la mémoire collective SDRAM à la fois, soit en écriture soit en lecture. Ceci implique qu'un bloc B ne peut accéder à la mémoire qu'en rafale (en anglais: burst). Deuxièmement, en cas de lecture, l'interface mémoire INT transforme les rafales de données provenant de la mémoire collective SDRAM et destinées pour un certain bloc B, en flux de données sensiblement régulier. Ce flux de données est ainsi transféré via le bus de lecture privé BBR concerné vers le bloc B. En cas d'écriture, l'interface mémoire INT transforme un flux de données sensiblement régulier provenant d'un certain bloc B en rafales de données pour écriture dans la mémoire collective SDRAM.

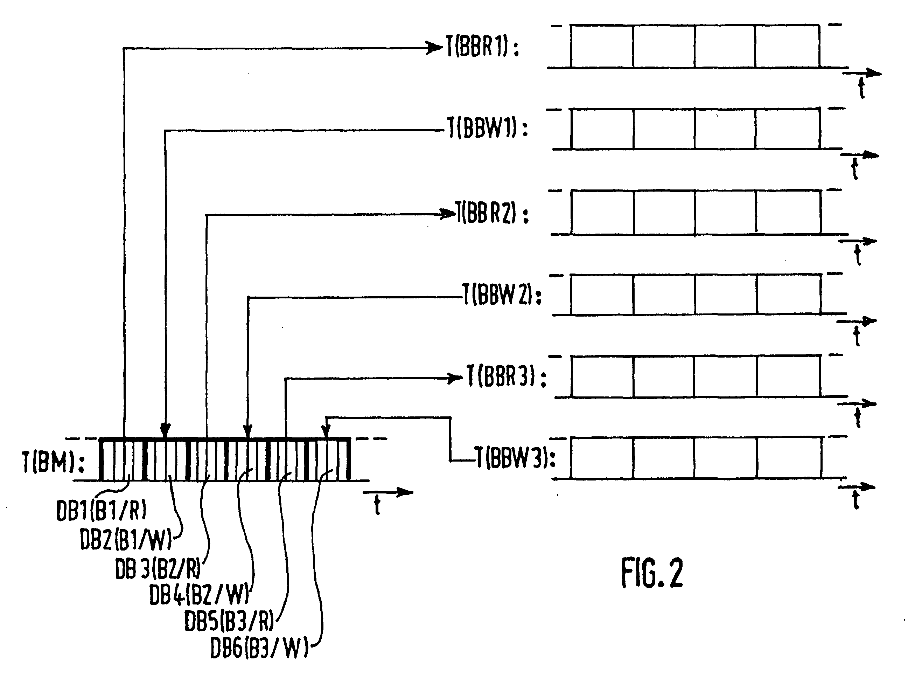

La Figure 2 illustre le fonctionnement de l'interface mémoire INT. T(BM) représente un trafic de données sur le bus collectif BM entre la mémoire collective SDRAM et l'interface mémoire INT. T(BBR1), T(BBR2) et T(BBR3) représentent respectivement des trafics de données sur les bus de lecture privés BBR1, BBR2 et BBR3 entre l'interface mémoire INT et les blocs B1, B2 et B3. T(BBW1), T(BBW2) et T(BBW3) représentent respectivement des trafics de données sur les bus d'écriture privés BBW1, BBW2 et BBW3 entre l'interface mémoire INT et les blocs B1, B2 et B3.

Le trafic de données T(BM) est composé de rafales de données DB. Chaque rafale de données DB correspond à un accès de la mémoire collective SDRAM par un bloc B soit en écriture soit en lecture. Les références entre parenthèses qui suivent DB indiquent à quel bloc B les données dans la rafale appartiennent et, en plus, le type d'accès: écriture (W) ou lecture (R). Par exemple, DB1(B1/R) indique que la rafale de données DB1 concerne un accès en lecture à la mémoire collective SDRAM par B1.

La Figure 2 illustre que l'interface mémoire INT effectue un "lissage" des rafales de données provenant de la mémoire collective SDRAM et appartenant à un certain bloc B. Cette Figure illustre également qu'inversement l'interface mémoire INT concentre dans le temps des données provenant d'un bloc B pour écrire ces données dans la mémoire collective SDRAM en rafale (compactage de données). Donc, les trafics de données via les bus de lecture privés BBR et les bus d'écriture privés BBW ont des débits relativement faibles. Par conséquent, ceci permet aux bus de lecture privés BBR et aux bus d'écriture privés BBW d'avoir des bandes passantes relativement faibles et, de ce fait, ceci permet à ces bus d'avoir une largeur relativement modeste. A cet égard il faut noter que la taille d'un bus ne doit pas nécessairement correspondre au nombre de bits contenus dans les données transférées par ce bus. Par exemple, une donnée comprenant 16 bits se laisse découper en mots de 4 bits. Ainsi on peut transférer cette donnée via un bus d'une taille de 4 bits sous forme d'une succession de 4 mots.

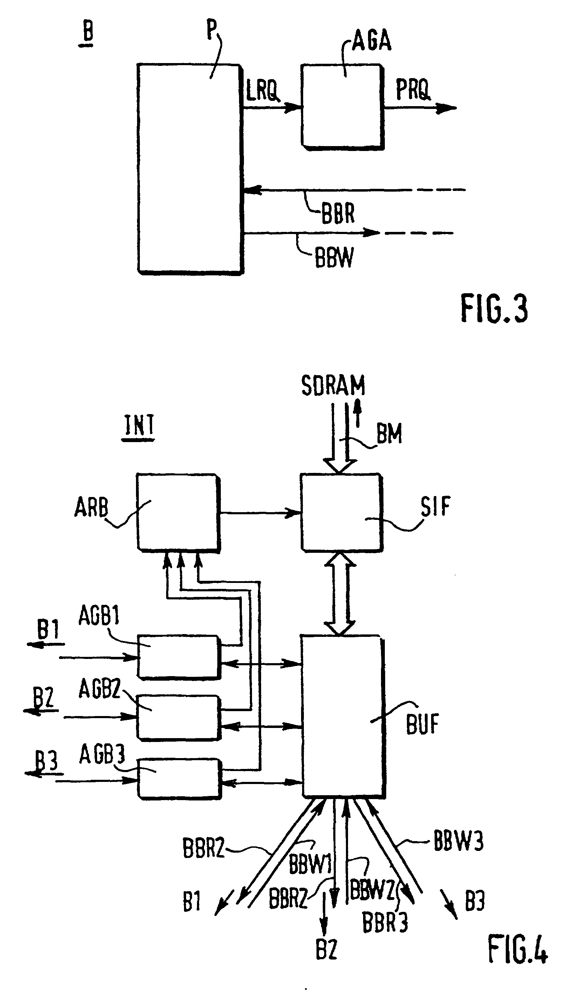

La Figure 3 illustre un bloc B. Le bloc B comprend un processeur P et un circuit d'adressage global AGA. Le processeur P fait des requêtes logiques LRQ. Supposant que le bloc B traite des données vidéo, une requête logique LRQ peut-être par exemple une demande de pixels d'une certaine ligne dans l'image courante. Le circuit d'adressage global AGA transforme la requête logique LRQ en requête physique PRQ. La requête physique PRQ définit les adresses physiques dans la mémoire collective SDRAM sous lesquelles les données demandées sont stockées. Les requêtes physiques PRQ peuvent avoir la forme suivante: une adresse de départ, un nombre d'adresses à aller chercher à partir de cette adresse et éventuellement un schéma à appliquer lors de la recherche des données. Le schéma peut être défini sous forme de: nombre d'adresses consécutives à lire, nombre d'adresses à sauter et nombre d'itérations "lire et sauter". L'AGA peut être programmable de telle façon que des paramètres de traduction définissent les traductions des requêtes logiques LRQ en requêtes physiques PRQ. Ceci permet une flexibilité de stockage des données dans la mémoire collective SDRAM.

La Figure 4 illustre l'interface mémoire INT. L'interface mémoire INT comprend un arbitre ARB, une interface d'accès SIF, un dispositif de mémoire tampon BUF et des circuits d'adressage en macro-commandes AGB. Il y a un circuit d'adressage en macro-commandes AGB pour chaque bloc B.

Le fonctionnement interne de l'interface mémoire INT est globalement comme suit. Chaque circuit d'adressage en macro-commandes AGB découpe une requête physique du bloc B auquel il est associé en macro-commandes. Une macro-commande représente une requête d'accès d'une certaine ligne dans la mémoire. Avant qu'une macro-commande soit soumise à l'arbitre ARB, le circuit d'adressage en macro-commandes AGB vérifie s'il y a suffisamment de place dans le dispositif de mémoire tampon BUF. A cet effet, il soumet d'abord la macro-commande au dispositif de mémoire tampon BUF. Si le dispositif de mémoire tampon BUF confirme qu'il y a de la place pour stocker le nombre de données défini par la macro-commande, le circuit d'adressage en macro-commandes AGB soumet la macro-commande à l'arbitre ARB. L'arbitre ARB recueille les macro-commandes provenant des différents circuits d'adressage en macro-commandes AGB et sélectionne une macro-commande pour envoi à l'interface d'accès SIF. Cette sélection se fait selon un schéma d'arbitrage qui est décrite ci-après. L'interface d'accès SIF traite les macro-commandes provenant de l'arbitre ARB dans l'ordre de leur réception. Ainsi, l'interface d'accès SIF effectue des accès à la mémoire collective SDRAM, les accès étant définis par la macro-commande en cours de traitement.

Une macro-commande permet d'accéder à X groupes d'adresses, chaque groupe contenant Y adresses, les groupes d'adresses étant séparés les un des autres de Z mots, X, Y et Z étant des entiers. Une macro-commande contient donc les informations suivantes:
- première adresse à accéder;
- nombre d'adresses à accéder consécutivement à la première adresse dans un groupe d'adresses (Y-1);
- nombre d'adresses à sauter entre deux groupes d'adresses consécutifs (Z);
- nombre de groupes d'adresses à accéder en plus du premier groupe (X-1);
- type d'accès: lecture ou écriture.

Un exemple d'une macro-commande au niveau du bit se fait comme suit. On suppose que les données stockées dans la mémoire collective SDRAM sont de 32 bits de large et la mémoire collective SDRAM a une taille maximale de 256 Mbits. Ceci implique qu'une adresse s'exprime sur 23 bits. On suppose de plus que les accès sont limites à une taille maximale de 16 adresses. Une telle limite est préférable du point de vue de latence. Donc X-1 et Y-1 valent 15 au maximum et, par conséquent, peuvent être codé sur 4 bits. Enfin, une ligne contient au maximum 512 adresses suivant la configuration de la mémoire collective SDRAM. Par conséquent, le nombre d'adresses à sauter ne peut excéder 511 et donc ce nombre peut être codé sur 9 bits. Les macro-commandes ont donc une taille de 23+2x4+9+1=41 bits. L'adresse peut être codée sur les bits 40 à 18, le type d'accès sur le bit 17, le nombre de mots à lire (Y-1) sur les bits 16 à 13, le nombre de mots à sauter (Z) sur les bits 12 à 4, et le nombre de groupes de mots (X-1) sur les bits 3 à 0.

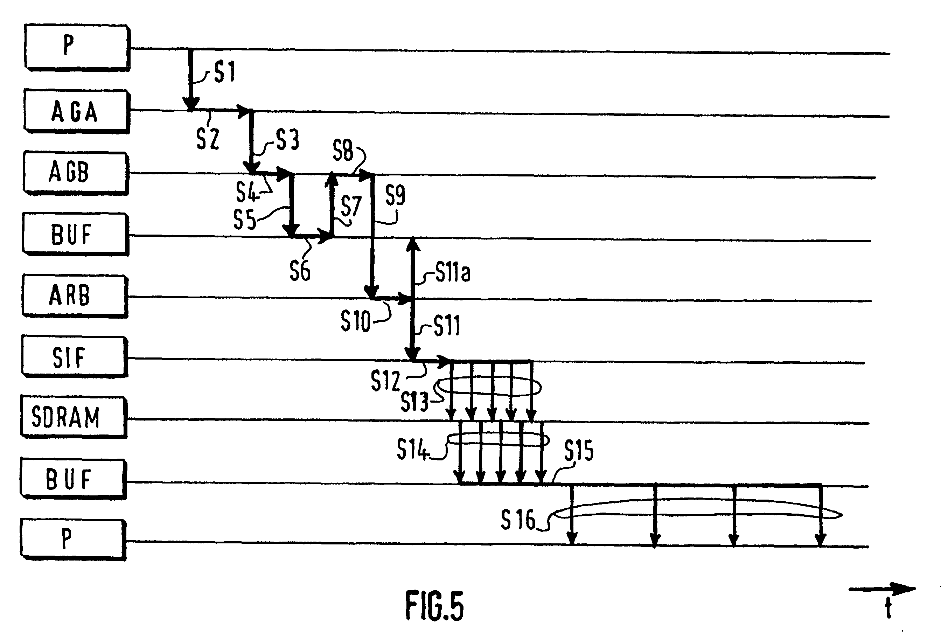

La Figure 5 illustre une procédure d'accès à la mémoire collective SDRAM en lecture par un certain bloc B. La dimension horizontale représente le temps. La dimension verticale de ce diagramme représente les différents éléments fonctionnels qui entrent en jeu. Le diagramme contient des flèches. Ces flèches représentent des différentes étapes S dans la procédure d'accès à la mémoire d'interface SRAM.
S1 = Le processeur P du bloc B concerné soumet une requête logique LRQ au circuit d'adressage global AGA. La requête logique LRQ spécifie un sous-ensemble de données, par exemple, les pixels de luminance d'une ligne, dans un ensemble de données à traiter, par exemple une image.
S2 = Le circuit d'adressage global AGA transforme la requête logique LRQ en requête physique PRQ.
S3 = Le circuit d'adressage global AGA soumet la requête physique PRQ au circuit d'adressage en macro-commandes AGB.
S4 = Le circuit d'adressage en macro-commandes AGB transforme la requête physique PRQ en macro-commandes.
S5 = Le circuit d'adressage en macro-commandes AGB soumet la première des macro-commandes dérivées de la requête physique PRQ au dispositif de mémoire tampon BUF.
S6 = Le dispositif de mémoire tampon BUF vérifie s'il y a de la place pour stocker le nombre de données spécifiées par la macro-commande.
S7 = Le dispositif de mémoire tampon BUF confirme au circuit d'adressage en macro-commandes AGB qu'il y a de la place (en anglais: acknowledge).
S8 = Représente un certain délai.
S9 = Le circuit d'adressage en macro-commandes AGB soumet la macro-commande à l'arbitre ARB.
S10 = L'arbitre ARB traite la macro-commande en tant que demande d'accès à la mémoire collective SDRAM selon un schéma d'arbitrage valable pour tous les accès des blocs à la mémoire collective SDRAM (en lecture et en écriture)
S11 = L'arbitre ARB soumet la macro-commande à l'interface d'accès SIF
S11a = L'arbitre ARB signale au dispositif de mémoire tampon BUF que la macro-commande a été soumise à l'interface d'accès SIF (en anglais: acknowledge).
S12= La macro-commande est en attente dans l'interface d'accès SIF qui traite d'abord les macro-commandes précédemment reçues.
S13 = L'interface d'accès SIF génère des signaux de contrôle pour la mémoire collective SDRAM à la base de la macro-commande. Ces signaux de contrôle ont pour effet que les données sous les adresses spécifiées par la macro-commande sont successivement lues.
S14 = Les données successivement lues de la mémoire collective SDRAM sont transférées au dispositif de mémoire tampon BUF.
S15 = Les données sont stockées temporairement dans le dispositif de mémoire tampon BUF.
S16 = Le dispositif de mémoire tampon BUF transfère les données au processeur P d'une façon sensiblement régulière.

Les étapes S5-S15 sont répétées pour chaque macro-commande suite à la requête logique LRQ faite à l'étape S1.

Les étapes suivantes ne sont pas représentées dans la Figure 5. Suite à l'étape S1, le circuit d'adressage global AGA envoie un signal de confirmation (en anglais: acknowledge) au processeur P. Ce signal indique que la requête logique LRQ a été acceptée et sera traitée. En réponse au signal de confirmation, le processeur P fait une nouvelle requête logique et la maintient jusqu'à nouvel ordre. Quand le circuit d'adressage en macro-commandes AGB soumet la dernière macro-commande suite à la requête logique LRQ, le traitement de la requête logique LRQ est achevé. Dans ce cas, le circuit d'adressage en macro-commandes AGB envoie un signal de confirmation (en anglais: acknowledge) au circuit d'adressage global AGA signalant au dernier que le traitement de la requête logique LRQ est achevé. En réponse, le circuit d'adressage global AGA commencera le traitement de la nouvelle requête logique LRQ d'une façon similaire au traitement de la requête logique LRQ faite dans l'étape S1. Autrement dit, l'histoire se répète.

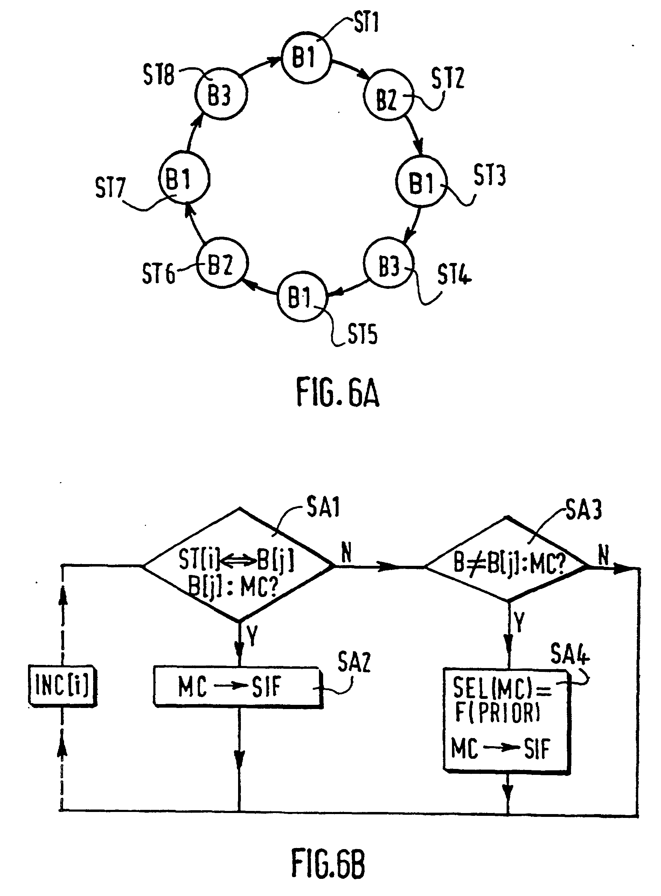

Les Figures 6a et 6b illustrent un schéma d'arbitrage pour l'arbitre ARB. La Figure 6a représente huit états ST1-ST8 sous forme de cercles. Ces états ST se produisent l'un après l'autre et d'une façon cyclique. Chaque état ST représente une possibilité d'envoi d'une macro-commande à l'interface d'accès SIF. Donc, chaque état représente une possibilité d'un accès mémoire. Chaque état appartient à un certain processeur P. Le processeur P auquel appartient un certain état figure dans le cercle représentant l'état.

La Figure 6b représente le procédé d'arbitrage associé à la Figure 6a. Ce procédé comprend plusieurs étapes SA1-SA4 et est effectué pour chaque état ST dans la Figure 6a. L'étape SA1 est la première étape effectuée après un saut d'état. Dans l'étape SA1 l'arbitre ARB vérifie si une macro-commande soumise par circuit d'adressage en macro-commandes AGB et suite à une requête logique LRQ du processeur P[j] auquel appartient l'état S[i], est en attente. Si une telle macro-commande est en attente, l'étape SA2 suit l'étape SA1. Dans l'étape SA2, l'arbitre ARB envoie la macro-commande concernée à l'interface d'accès SIF. Ceci aura pour effet qu'après un certain délai, un accès de la mémoire collective SDRAM pour le processeur P concerné sera effectué tel que défini par la macro-commande. Après l'envoi de la macro-commande, l'arbitre ARB saute vers l'état suivant ce qui implique que le procédé représenté par la Figure 6b se répète.

Si, par contre, l'arbitre ARB constate dans l'étape S1 qu'il n'y a pas en attente une macro-commande liée au processeur P auquel appartient l'état S[i], l'étape SA3 suit l'étape SA1. Dans l'étape SA3 l'arbitre ARB vérifie si d'autres macro-commandes sont en attente. S'il n'y a pas d'autres macro-commandes en attente, l'arbitre ARB saute vers l'état suivant et le procédé représenté par la Figure 6b se répète. S'il y a d'autres macro-commandes en attente, l'arbitre ARB effectue l'étape SA4. Dans l'étape SA4, l'arbitre ARB sélectionne une macro-commande selon un schéma de priorité. Chaque macro-commande a un certain niveau de priorité. Le niveau de priorité est déterminé par le processeur P qui est à l'origine de la macro-commande. L'arbitre ARB sélectionne donc la macro-commande ayant le niveau de priorité le plus élevé et envoie cette macro-commande à l'interface d'accès SIF. Après l'envoi de la macro-commande, l'arbitre ARB saute vers l'état suivant ce qui implique que le procédé représenté par la Figure 6b se répète.

A l'égard des Figures 6a et 6b il faut noter qu'il n'est pas nécessaire que chaque état appartienne à un processeur P. On pourrait introduire un ou plusieurs états n'appartenant à aucun processeur P, ce qui veut dire que l'on pourrait introduire des états libres. Dans le cas d'un état libre, l'arbitre ARB sélectionne une macro-commande qu'à la base du schéma de priorité. Un état libre peut être utile dans le cas où le dispositif de traitement de données contiendrait un processeur P dont les contraintes en termes de temps de latence et de bande passante au niveau de l'accès à la mémoire collective SDRAM, sont relativement peu sévères. Dans ce cas, il serait préférable de ne pas attribuer un état à ce processeur P. Pour éviter que ce processeur P souffre d'une pénurie d'accès, on pourra donc introduire des états libres. Le processeur P pourra profiter de ces états libres pour accéder à la mémoire collective SDRAM.

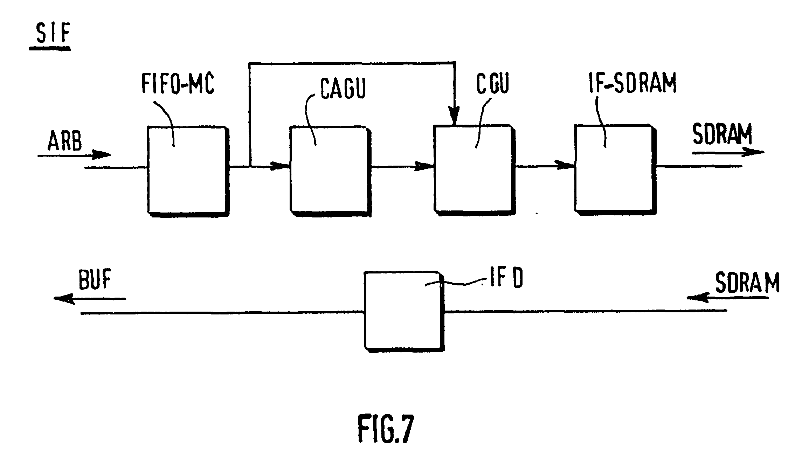

La Figure 7 illustre un exemple de l'interface d'accès SIF. L'interface d'accès SIF comprend une mémoire tampon de macro-commandes FIFO_MC, un générateur de colonnes CAGU, un générateur de commandes CGU, un générateur de signaux de contrôle IF_SDRAM, une mémoire tampon de données IF_D.

L'interface d'accès SIF fonctionne globalement comme suit. La mémoire tampon de macro-commandes FIFO_MC reçoit les macro-commandes provenant de l'arbitre ARB. Cette mémoire les stocke temporairement et envoie ces macro-commandes vers le générateur de colonnes CAGU dans l'ordre de leur arrivé. Dans le cas où la mémoire tampon de macro-commandes FIFO_MC serait pleine, et donc ne peut pas accepter une nouvelle macro-commande, elle signale ceci à l'arbitre ARB. Ce signal de l'interface d'accès SIF disant "ma FIFO est pleine" a pour effet que l'arbitre ARB attend d'envoyer la macro-commande couramment sélectionnée jusqu'au moment où la mémoire tampon de macro-commandes FIFO_MC signale qu'elle peut accepter une nouvelle macro-commande. En effet, le signal de l'interface d'accès SIF disant "ma FIFO est pleine" gèle l'arbitre ARB pour un certain temps.

Le générateur de colonnes CAGU demande une nouvelle macro-commande de la mémoire tampon de macro-commandes FIFO_MC quand les accès mémoires selon la macro-commande précédente ont été effectués. Le générateur de colonnes CAGU en combinaison avec le générateur de commandes CGU traduisent, en effet, la macro-commande en une série d'adresses. Une adresse de la mémoire collective SDRAM est définie par le numéro d'un banc (en anglais: bank) de la mémoire collective SDRAM, le numéro d'une ligne et le numéro d'une colonne. Il a déjà été mentionné qu'une macro-commande concerne un accès d'une seule ligne de la mémoire d'interface SRAM ce qui implique automatiquement que l'accès a lieu dans un seul banc. Donc, il suffit que le générateur de colonnes CAGU génère une série de colonnes à la base de la macro-commande pour définir une série d'adresses conformément à la macro-commande. Une implémentation du générateur de colonnes CAGU peut, par exemple, comprendre quelques compteurs et quelques circuits logiques. Dans une telle implémentation, le contenu d'une macro-commande sert à programmer les compteurs.

Le générateur de commandes CGU reçoit successivement un autre numéro de colonne de la mémoire collective SDRAM. Le générateur de commandes CGU reçoit en outre de la mémoire tampon de macro-commandes FIFO_MC le numéro du banc et le numéro de la ligne des adresses telles que définies par la macro-commande. Ces informations permettent au générateur de colonnes CAGU de définir une succession de commandes d'accès à la mémoire collective SDRAM, chaque commande définissant une seule adresse. En outre le générateur de commandes CGU génère des commandes nécessaires pour mettre la mémoire collective SDRAM dans un bon état pour permettre des accès tels que définis par les macro-commandes. Ces commandes concernent des procédés propres à la mémoire collective SDRAM tel que pré-charge et activation. En outre, le générateur de commandes CGU fait en sorte que la mémoire collective SDRAM est régulièrement rafraîchie et génère les commandes nécessaires pour effectuer ces rafraîchissements.

Le générateur de signaux de contrôle IF_SDRAM génère des signaux de contrôle à la base des commandes reçues du générateur de commandes CGU. Par exemple, le générateur de signaux de contrôle IF_SDRAM génère des signaux connus sous les abréviations RAS, CAS. Le générateur de signaux de contrôle IF_SDRAM fait en sorte que dans une suite de signaux de contrôle, certains délais propres à la mémoire collective SDRAM soient respectés. Ces délais peuvent varier en fonction du type de la mémoire collective SDRAM utilisée. Donc, le générateur de signaux de contrôle IF_SDRAM est spécifique pour le type de la mémoire collective SDRAM utilise. Si on désire utiliser une mémoire collective SDRAM d'un autre type il suffirait de modifier, voire reprogrammer, le générateur de signaux de contrôle IF_SDRAM. Les autres éléments de l'interface d'accès ne nécessiteraient en principe pas de modifications.

La mémoire tampon de données IF_D sert, en cas de lecture, à transférer les données de la mémoire collective SDRAM au dispositif de mémoire tampon BUF illustré dans la Figure 4 et, en cas d'écriture, à transférer les données du dispositif de mémoire tampon BUF vers la mémoire collective SDRAM. Pour cela, la mémoire tampon de données IF_D effectue une synchronisation des données provenant de la mémoire collective SDRAM (lecture) et des données appliquées à la mémoire collective SDRAM (écriture). En outre, la mémoire tampon de données IF_D constitue une FIFO ayant une profondeur d'une unité. Cela veut dire que si un certain coup d'horloge fait qu'une donnée de la mémoire collective SDRAM est lue, cette donnée sera transférée vers le dispositif de mémoire tampon BUF au coup d'horloge suivant. L'inverse s'applique en cas d'écriture.

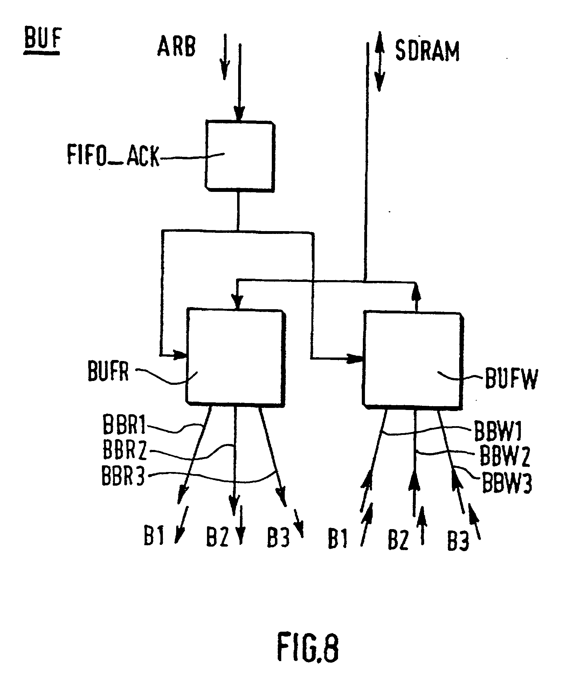

La Figure 8 illustre un exemple du dispositif de mémoire tampon BUF faisant partie de l'interface mémoire INT illustrée dans la Figure 4. Le dispositif de mémoire tampon BUF comprend un dispositif de mémoire tampon pour lecture BUFR, ainsi qu'un dispositif de mémoire tampon pour écriture BUFW et une mémoire tampon pour signaux de confirmation FIFO_ACK. Le dispositif de mémoire tampon pour lecture BUFR et le dispositif de mémoire tampon pour écriture BUFW sont reliés à la mémoire collective SDRAM via l'interface d'accès SIF et le bus collectif BM tel qu'illustré dans la Figure 1. Le dispositif de mémoire tampon pour lecture BUFR est relié aux blocs B1, B2 et B3 par respectivement les bus de lecture privés BBR1, BBR2 et BBR3. Le dispositif de mémoire tampon pour écriture BUFW est relié aux blocs B1, B2 et B3 par respectivement les bus d'écriture privés BBW1, BBW2 et BBW3. La mémoire tampon pour signaux de confirmation FIFO_ACK est reliée à l'arbitre ARB.

Le dispositif de mémoire tampon BUF fonctionne globalement comme suit. Le dispositif de mémoire tampon pour lecture BUFR stocke temporairement les données provenant de la mémoire collective SDRAM, tandis que le dispositif de mémoire tampon pour écriture BUFW stocke les données provenant des différents blocs B et à écrire dans la mémoire collective SDRAM. La mémoire tampon pour signaux de confirmation FIFO_ACK reçoit les signaux de confirmation provenant de l'arbitre ARB. Un tel signal indique que l'arbitre ARB a envoyé une macro-commande à l'interface d'accès SIF.

La mémoire tampon pour signaux de confirmation FIFO_ACK a la même profondeur que la mémoire tampon de macro-commandes FIFO_MC de l'interface d'accès SIF illustrée dans la Figure 7. Par conséquent, quand une macro-commande sort de la mémoire tampon de macro-commandes FIFO_MC, ce qui a pour effet qu'un accès mémoire se déroule selon la macro-commande, le signal de confirmation correspondant à cette macro-commande sort de la mémoire tampon pour signaux de confirmation FIFO_ACK. Ce signal indique si l'accès concerné est un accès en lecture ou un accès en écriture. Dans le premier cas, le dispositif de mémoire tampon pour lecture BUFR sera activé pour recevoir des données depuis la mémoire collective SDRAM, tandis que dans le dernier cas le dispositif de mémoire tampon pour écriture BUFW sera activé pour envoyer des données vers la mémoire collective SDRAM. Le signal de confirmation fourni par la mémoire tampon pour signaux de confirmation FIFO_ACK indique en outre le nombre de données impliqué dans l'accès tel que défini par la macro-commande. Cette indication sert au dispositif de mémoire tampon BUF pour faire la gestion interne "où stocker les données ou d'où prendre les données?" respectivement en cas de lecture ou écriture.

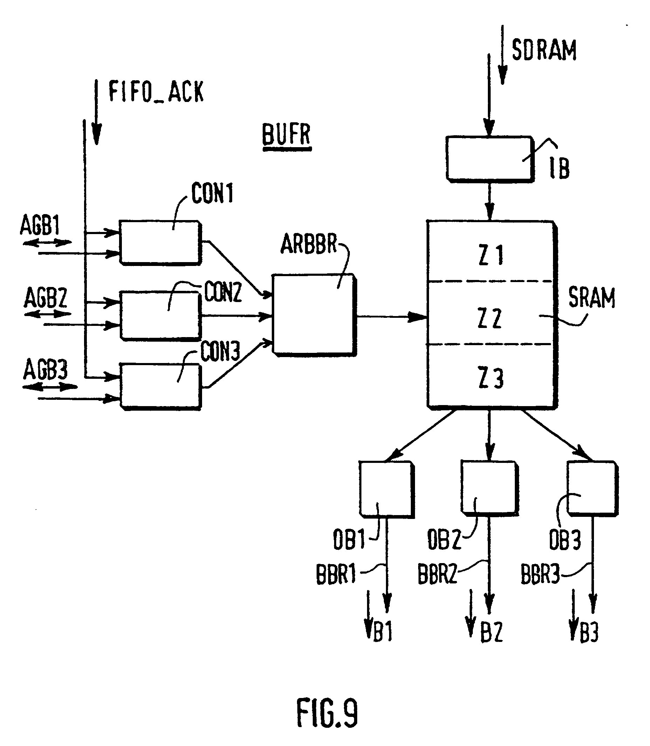

La Figure 9 illustre un exemple du dispositif de mémoire tampon pour lecture BUFR. Le dispositif de mémoire tampon pour lecture BUFR comprend une mémoire tampon d'entrée IB, une mémoire d'interface SRAM, un ensemble de plusieurs mémoires tampon de sortie OB, un ensemble de circuits de contrôle CON et un arbitre d'accès à la mémoire d'interface ARBBR. La mémoire tampon d'entrée IB est relie à la mémoire collective SDRAM via l'interface d'accès SIF déjà montré dans la Figure 4. Les mémoires tampon de sortie OB1,OB2 et OB3 sont respectivement reliées aux processeurs P1, P2 et P3 via les bus de lecture privés BBR1, BBR2 et BBR3, ces derniers éléments étant montrés dans les Figures 2 et 3. Les circuits de contrôle CON1,CON2 et CON3 sont respectivement reliées aux circuits d'adressage en macro-commandes AGB1, au circuit d'adressage en macro-commandes AGB2 et au circuit d'adressage en macro-commandes AGB3, ainsi qu'à l'interface d'accès SIF.

Le dispositif de mémoire tampon pour lecture BUFR fonctionne comme suit. Les données reçues depuis la mémoire collective SDRAM ont une largeur de N bits, N étant un entier, et arrivent à une fréquence F. La mémoire d'interface SRAM a une largeur de 2N bits, une adresse peut donc contenir 2N bits, et fonctionne à la fréquence F. La mémoire tampon d'entrée IB forme des couples de deux données consécutives provenant de la mémoire collective SDRAM, et écrit ces couples dans la mémoire d'interface SRAM. Il faut deux cycles d'horloge pour former un couple. En supposant que toutes les données successives reçues depuis la mémoire collective SDRAM puissent se mettre en couple, un accès en écriture à la mémoire d'interface SRAM aura lieu tous les deux cycles d'horloge. Un accès à une seule adresse ne prend qu'un seul cycle d'horloge. Donc, entre deux accès en écriture on dispose d'un cycle d'horloge pour accéder à la mémoire d'interface SRAM en lecture à fin de transférer les données lues de la mémoire collective SDRAM vers les blocs B. Donc, en principe, les accès à la mémoire d'interface SRAM en écriture et les accès en lecture peuvent avoir lieu en alternance et un par un. L'accès à la mémoire d'interface SRAM sera expliqué plus en détail dans la suite.

La mémoire d'interface SRAM est en effet découpée en trois zones Z1, Z2 et Z3. Les zones Z1, Z2 et Z3 contiennent respectivement les données destinées pour les processeurs P1, P2 et P3. Les données provenant de la mémoire collective SDRAM sont écrites par l'intermédiaire de la mémoire tampon d'entrée IB dans la zone Z1, Z2 ou Z3 en fonction du processeur P qui est à l'origine de la macro-commande en cours. Les données contenues dans les zones Z1, Z2 et Z3 sont respectivement transférées dans les mémoires tampon de sortie OB1, OB2 et OB3 d'une façon sensiblement régulière et selon un schéma plus ou moins fixe. Une mémoire tampon de sortie OB découpe, en effet, une donnée en plusieurs morceaux et envoie la donnée au processeur P concerné, morceau par morceau. Par exemple, une mémoire tampon de sortie OB peut découper une donnée de 16 bits en 4 morceaux de 4 bits. Donc, au lieu d'envoyer la donnée dans un seul coup d'horloge, ce qui nécessite un bus d'une taille de 16 bits, on envoie la donnée morceau par morceau en 4 coups d'horloge ce qui nécessite un bus d'une taille de 4 bits seulement.

Les circuits de contrôle CON1, CON2 et CON3 gèrent respectivement les zones Z1, Z2 et Z3. A cet effet, chaque circuit de contrôle CON gère un ensemble de paramètres. Ces paramètres comprennent un pointeur d'écriture, un pointeur de lecture et une valeur de remplissage de la zone. Le pointeur d'écriture définit l'adresse dans laquelle une donnée provenant de la mémoire collective SDRAM sera écrite. Le pointeur de lecture définit l'adresse de la donnée devant être transférée vers la mémoire tampon de sortie OB concernée. La valeur de remplissage indique le nombre d'adresses encore disponibles pour stocker des données provenant de la mémoire collective SDRAM. Les circuits de contrôle CON1, CON2 et CON3 gèrent aussi respectivement les mémoires tampons de sortie OB1, OB2 et OB3. Pour cela chaque circuit de contrôle CON gère un paramètre représentant l'état de remplissage de l'OB qui lui appartient.

La gestion effectuée par un circuit de contrôle CON sera maintenant décrite en supposant qu'un accès à la mémoire collective SDRAM a lieu tel qu'illustré dans la Figure 5. Dans l'étape S5, le circuit d'adressage en macro-commandes AGB soumet une macro-commande au dispositif de mémoire tampon BUF. Cette macro-commande est traitée par le circuit de contrôle CON appartenant au processeur P qui était à l'origine de la macro-commande. Le circuit de contrôle CON compare le nombre de données défini par la macro-commande avec la valeur de remplissage. Ainsi, le circuit de contrôle CON vérifie s'il y a suffisamment de place dans la zone Z concernée pour stocker les données voulues. S'il y a suffisamment de place, le circuit de contrôle CON le signale au circuit d'adressage en macro-commandes AGB et, en plus, met à jour le paramètre de remplissage. Ceci veut dire qu'il considère que les données sont déjà stockées dans la zone concernée tandis que ceci doit encore se produire. La mise à jour du paramètre de remplissage peut donc être considérée comme une réservation dans la zone concernée.

Ce qui se passe pendant l'étape S12 tel qu'illustré dans la Figure 5 va maintenant être décrit. Cette étape S12 représente une lecture de la mémoire collective SDRAM selon la macro-commande concernée. Il a déjà été expliqué qu'au moment où l'interface d'accès SIF commence à traiter la macro-commande et donc commence à faire la lecture, le signal de confirmation associé à la macro-commande concernée sort de la mémoire tampon pour signaux de confirmation FIFO_ACK illustré dans la Figure 7. Ce signal de confirmation indique qu'il s'agit d'un accès en écriture et, en plus, ce signal indique le processeur P qui était à l'origine de la macro-commande. Ainsi, le circuit de contrôle CON appartenant à ce processeur P sait qu'il doit fournir les adresses sous lesquelles les données doivent être stockées dans la mémoire collective SDRAM. En plus, le circuit de contrôle CON reçoit une indication du nombre de données impliqué dans l'accès selon la macro-commande, cette indication faisant partie du signal de confirmation.

Après chaque écriture d'un couple de données provenant de la mémoire collective SDRAM dans la zone Z concernée, le circuit de contrôle CON incrémente le pointeur d'écriture. En plus, il met à jour la valeur de remplissage. Le circuit de contrôle CON continue à faire ceci jusqu'à ce que l'accès en lecture de la mémoire collective SDRAM tel que défini par la macro-commande ait été achevé. Le circuit de contrôle CON détecte la fin de l'accès grâce au nombre de données impliqué dans l'accès, ce nombre lui étant indiqué par le signal de confirmation, et une comptabilisation des données écrites dans la mémoire d'interface SRAM.

Après chaque lecture d'un couple de données d'une certaine zone Z, le circuit de contrôle CON qui gère cette zone incrémente le pointeur de lecture. En plus, il met à jour la valeur de remplissage.

L'arbitre d'accès à la mémoire d'interface ARBBR gère l'accès à la mémoire d'interface SRAM. Il y a différents types d'accès: (1) accès par l'interface d'accès SIF pour écrire des données provenant de la mémoire collective SDRAM dans la mémoire d'interface SRAM, (2) des accès par la mémoire tampon de sortie OB1, (3) des accès par la mémoire tampon de sortie OB2 et (4) des accès par la mémoire tampon de sortie OB3. Ces trois derniers accès servent à transférer des données contenues dans la mémoire d'interface SRAM respectivement vers les processeurs P1, P2 et P3.

Chaque accès à la mémoire d'interface SRAM se fait suite à une requête soumise à l'arbitre d'accès à la mémoire d'interface ARBBR. L'arbitre d'accès à la mémoire d'interface ARBBR sélectionne parmi les requêtes en cours, la requête ayant la priorité la plus élevée. Les requêtes pour accès en écriture (accès par l'interface d'accès SIF) ont la priorité maximale. Grâce au fait qu'on écrit des couples de données comme expliqué dans ce qui précède, une telle requête ne se produit en général qu'une fois tous les deux cycles d'horloge. Une écriture ne prend qu'un cycle d'horloge. Donc, il y aura suffisamment d'opportunités pour accéder à la mémoire d'interface SRAM en lecture afin de transférer les données vers les différents processeurs P.

Les requêtes d'accès en lecture par une certaine mémoire tampon de sortie OB se font en fonction de la taille du bus de lecture privé BBR entre la mémoire tampon de sortie OB et le bloc B. Par exemple, supposons que la taille du bus est N/2 bits. Ceci implique qu'on peut transférer un morceau de N/2 bits de la mémoire tampon de sortie OB vers le bloc B à chaque cycle d'horloge. Une lecture de la mémoire d'interface SRAM se fait par couple de données. Un couple de données comprend 2N bits. Il faut donc 4 cycles d'horloge pour envoyer un couple de données vers le bloc B. Le transfert d'un couple de données implique une requête d'accès à la mémoire d'interface SRAM en lecture. Donc, selon l'exemple, l'OB fera une requête d'accès tous les 4 cycles d'horloge. Cet exemple montre que les largeurs des bus vers les blocs B conditionne la fréquence des requêtes d'accès des diverses mémoires tampon de sortie OB. Si la taille du bus de lecture privé BBR égale N/4 bit, il y a une requête d'accès tous les 8 cycles d'horloge.

La description suivante concerne un exemple d'arbitrage de l'accès à la mémoire d'interface SRAM. Il est supposé que la taille du bus de lecture privé BBR1 égale N/2 bits et que la taille du bus de lecture privé BBR2 et celle du bus de lecture privé BBR3 égale N/4 bits. Les accès de l'interface d'accès SIF sont les plus prioritaires, viennent ensuite les accès des mémoires tampon de sortie OB1, OB2, et OB3 dans l'ordre de priorité. Finalement, il est supposé que tout les types d'accès (SIF, OB1, OB2,OB3) fassent une requête en même temps dans le premier cycle d'horloge.
Cycle 1: tout le monde fait sa requête en même temps; requêtes en cours: l'interface d'accès SIF, les mémoires tampon de sortie OB1, OB2, et OB3.
Cycle 2: l'interface d'accès SIF étant la plus prioritaire, a la main et baisse sa requête; les mémoires tampon de sortie OB1, OB2 et OB3 maintiennent leurs requêtes; requêtes en cours: les mémoires tampon de sortie OBI, OB2 et OB3.
Cycle 3: la mémoire tampon de sortie OB1, qui est la seconde dans l'ordre de priorité, a la main et baisse sa requête; l'interface d'accès SIF fait à nouveau une requête; requêtes en cours: interface d'accès SIF, les mémoires tampon de sortie OB2 et OB3.
Cycle 4: l'interface d'accès SIF étant la plus prioritaire a la main et baisse sa requête; les mémoires tampon de sortie OB2 et OB3 maintiennent leurs requêtes; requêtes en cours: les mémoires tampon de sortie OB2 et OB3.
Cycle 5: la mémoire tampon de sortie OB2, qui est la troisième dans l'ordre de priorité, a la main et baisse sa requête; l'interface d'accès SIF fait à nouveau une requête; requêtes en cours: l'interface d'accès SIF et la mémoire tampon de sortie OB3.
Cycle 6: l'interface d'accès SIF étant la plus prioritaire a la main et baisse sa requête; la mémoire tampon de sortie OB1 va épuiser son tampon et refait une requête; requêtes en cours: l'interface d'accès SIF, les mémoires tampon de sortie OB1 et OB3.
Cycle 7: la mémoire tampon de sortie OB1, qui est la seconde dans l'ordre de priorité, a la main et baisse sa requête; l'interface d'accès SIF fait à nouveau une requête; requêtes en cours: l'interface d'accès SIF, la mémoire tampon de sortie OB3.
Cycle 8: l'interface d'accès SIF étant la plus prioritaire a la main et baisse sa requête; la mémoire tampon de sortie OB3 maintient sa requête; requête en cours: la mémoire tampon de sortie OB3.
Cycle 9: la mémoire tampon de sortie OB3, qui est la quatrième dans l'ordre de priorité, a la main et baisse sa requête; l'interface d'accès SIF fait à nouveau une requête; requête en cours: l'interface d'accès SIF.
Cycle 10: l'interface d'accès SIF étant la plus prioritaire a la main et baisse sa requête; la mémoire tampon de sortie OB1 va épuiser son tampon et refait une requête; requête en cours: la mémoire tampon de sortie OB1.
Cycle 11: la mémoire tampon de sortie OB1, qui est la seconde dans l'ordre de priorité, a la main et baisse sa requête; l'interface d'accès SIF fait à nouveau une requête; requête en cours: l'interface d'accès SIF.
Cycle 12: l'interface d'accès SIF étant la plus prioritaire a la main et baisse sa requête; la mémoire tampon de sortie OB2 va épuiser son tampon et refait une requête; requête en cours: la mémoire tampon de sortie OB2.
Cycle 13: la mémoire tampon de sortie OB2, qui est la troisième dans l'ordre de priorité, a la main et baisse sa requête; l'interface d'accès SIF fait à nouveau une requête; requête en cours: l'interface d'accès SIF.
Cycle 14: l'interface d'accès SIF étant la plus prioritaire a la main et baisse sa requête; la mémoire tampon de sortie OB1 va épuiser son tampon et refait une requête; requête en cours: la mémoire tampon de sortie OB1.
Cycle 15: la mémoire tampon de sortie OB1, qui est la seconde dans l'ordre de priorité, a la main et baisse sa requête; l'interface d'accès SIF fait à nouveau une requête: requête en cours: l'interface d'accès SIF.
Cycle 16: l'interface d'accès SIF étant la plus prioritaire a la main et baisse sa requête; la mémoire tampon de sortie OB3 va épuiser son tampon et refait une requête; requête en cours: la mémoire tampon de sortie OB3.
Cycle 17: la mémoire tampon de sortie OB3, qui est la quatrième dans l'ordre de priorité, a la main et baisse sa requête; l'interface d'accès SIF fait à nouveau une requête; requête en cours: l'interface d'accès SIF.
Cycle 18: l'interface d'accès SIF étant la plus prioritaire a la main et baisse sa requête; la mémoire tampon de sortie OB1 va épuiser son tampon et refait une requête; requête en cours: la mémoire tampon de sortie OB1.
Cycle 19: la mémoire tampon de sortie OB1, qui est la seconde dans l'ordre de priorité, a la main et baisse sa requête; l'interface d'accès SIF fait à nouveau une requête; requête en cours: l'interface d'accès SIF.
Cycle 20: l'interface d'accès SIF étant la plus prioritaire a la main et baisse sa requête; la mémoire tampon de sortie OB2 va épuiser son tampon et refait une requête; requête en cours: la mémoire tampon de sortie OB2.
Cycle 21: la mémoire tampon de sortie OB2, qui est la troisième dans l'ordre de priorité, a la main et baisse sa requête; l'interface d'accès SIF fait à nouveau une requête; requête en cours: l'interface d'accès SIF.
Cycle 22: l'interface d'accès SIF étant la plus prioritaire a la main et baisse sa requête; la mémoire tampon de sortie OB1 va épuiser son tampon et refait une requête; requête en cours: mémoire tampon de sortie OB1.
Cycle 23: la mémoire tampon de sortie OB1, qui est la seconde dans l'ordre de priorité, a la main et baisse sa requête; l'interface d'accès SIF fait à nouveau une requête; requête en cours: l'interface d'accès SIF.
Cycle 24: l'interface d'accès SIF étant la plus prioritaire a la main et baisse sa requête; la mémoire tampon de sortie OB3 va épuiser son tampon et refait une requête; requête en cours: la mémoire tampon de sortie OB3.
Cycle 25: la mémoire tampon de sortie OB3, qui est la quatrième dans l'ordre de priorité, a la main et baisse sa requête; l'interface d'accès SIF fait à nouveau une requête; requête en cours: l'interface d'accès SIF.
Cycle 26: l'interface d'accès SIF étant la plus prioritaire a la main et baisse sa requête; la mémoire tampon de sortie OB1 va épuiser son tampon et refait une requête; requête en cours: la mémoire tampon de sortie OB1.
Etc.

Les accès dans l'exemple ci-dessus ont une périodicité de 8 cycles. C'est comme si l'arbitrage était assuré par une machine circulaire à huit états. Ce résultat est dû au fait que dans l'exemple il est supposé que tous les blocs B consomment leur données d'une façon régulière. En outre, il est supposé que les requêtes d'accès par l'interface d'accès SIF se fassent d'une façon régulière une fois tous les deux cycles d'horloge. Ces suppositions ne sont pas nécessairement correctes dans la pratique. Pour cette raison, il est préférable de gérer les accès à la mémoire d'interface SRAM à l'aide d'un arbitre et d'un schéma de priorité au lieu d'une machine circulaire. L'arbitre permet une certaine flexibilité au niveau de l'accès à la mémoire d'interface SRAM et, par conséquent, il permet une meilleure utilisation de la bande passante disponible pour le transfert de données.

Ce qui suit est un exemple d'exception à la règle selon laquelle il n'y a qu'un accès en écriture à la mémoire d'interface SRAM (= accès par l'interface d'accès SIF) tous les deux cycles d'horloge. L'exception se présente lorsqu'il y a un accès à la mémoire collective SDRAM suite à une macro-commande qui implique un nombre de données impair. Toutes les données de cet accès sauf la dernière, trouvent un partenaire et ainsi forment des couples pour l'écriture dans la mémoire d'interface SRAM. La dernière donnée se trouve seule. On ne peut pas prendre la donnée qui suit pour faire un couple car cette donnée est la première donnée d'un autre accès et donc elle est destinée à un autre processeur P. Par conséquent, cette première donnée d'un autre accès doit être stockée dans une autre zone Z de la mémoire d'interface SRAM. Donc, suite à l'arrivée dans la mémoire tampon d'entrée IB de la dernière donnée de l'accès comprenant un nombre de données impair, cette donnée est écrite dans la mémoire d'interface SRAM sans partenaire dans le cycle d'horloge qui suit l'écriture du dernier couple de données compris dans l'accès. Par conséquent, il y aura deux accès d'écriture de suite sans pause d'un cycle d'horloge qui autrement permettrait un accès en lecture entre deux accès en écriture.

Les Figures 5 et 9 concernent le fonctionnement de l'interface mémoire INT en lecture. Le fonctionnement en écriture et sensiblement symétrique. Ceci implique que le dispositif de mémoire tampon pour écriture BUFW et similaire au dispositif de mémoire tampon pour lecture BUFR décrit précédemment. Donc, le dispositif de mémoire tampon pour écriture BUFW comprend une mémoire d'interface repartie en zones, chaque zone appartenant à un bloc B différent. Les blocs B peuvent envoyer des données à écrire dans la mémoire collective avant ou après la macro-commande qui indique ou ces données doivent être stockées. En effet, une zone va se remplir dès que le bloc B auquel la zone appartient envoie des données destinées à être stockées dans la mémoire collective. Ce remplissage peut, par exemple, continuer jusqu'à ce que la zone soit complètement remplie de données. Dans ce cas, l'interface mémoire INT indiquera au bloc B concerné qu'il n'y a plus de place pour stocker de nouvelles données. Ceci empêchera le bloc B d'envoyer de nouvelles données jusqu'à ce que de la place soit libérée dans la zone concernée. Un transfert de données de la zone Z vers la mémoire collective fait que de la place est libérée. Une telle vidange pourra intervenir dès qu'une macro-commande sera acceptée par l'arbitre ARB et traitée par l'interface d'accès SIF. Il est également possible qu'une macro-commande soit émise avant que le bloc B concerné ait envoyé les données. De toute façon, aucune macro-commande ne sera présentée à l'arbitre ARB tant que le dispositif de mémoire tampon pour écriture BUFW n'indiquera pas un niveau de remplissage suffisant de la zone concernée.

Le dispositif de traitement de données décrit précédemment en référence aux Figures 1-9 est un exemple d'implémentation de l'invention telle qu'exposée dans la partie "exposé de l'invention". Faisant référence à la Figure 1, le bus de lecture privé BBR1 et le bus d'écriture privé BBW1 permettent des transferts de données exclusivement entre le bloc B1 et la mémoire collective SDRAM. Le bus de lecture privé BBR2 et le bus d'écriture privé BBW2 permettent des transferts de données exclusivement entre le bloc B2 et la mémoire collective SDRAM. Le bus de lecture privé BBR3 et le bus d'écriture privé BBW3 permettent des transferts de données exclusivement entre le bloc B3 et la mémoire collective SDRAM. L'interface mémoire INT permet à chaque bloc B d'accéder à la mémoire en rafales de données tandis qu'elle produit de flux de données sensiblement réguliers sur les bus de lecture prives BBR et les nus d'écriture prives BBW. En effet, pour chaque bloc B, l'interface mémoire INT effectue un lissage des rafales de données provenant de la mémoire collective SDRAM et destinées pour le bloc B. Réciproquement, pour chaque bloc B, l'interface mémoire comprime les données provenant du bloc B dans le temps afin d'écrire ces données dans la mémoire collective SDRAM en rafales.

La description ci-dessus en référence aux Figures illustre l'invention plutôt qu'elle ne la limite. Il est évident qu'il existe de nombreuses alternatives qui rentrent dans la portée des revendications ci-jointes. A cet égard, quelques remarques sont faites en conclusion.

Il existe de nombreuses manières pour implémenter un dispositif de traitement de données selon l'invention. Le dispositif illustré à la Figure 1 comprend trois processeurs. D'autres implémentations peuvent comprendre plus de processeurs ou moins. En outre, il n'est pas impératif qu'il existe un bus privé pour chaque processeur. Quelques processeurs peuvent partager un bus collectif via lequel ils pourront accéder à la mémoire collective. Par exemple, le dispositif de traitement de données illustré à la Figure 1 peut comprendre deux processeurs supplémentaires non-montrés dans la Figure 1, qui partagent un bus collectif via lequel ils pourront accéder à la mémoire collective SDRAM ou une autre mémoire collective.

Il existe de nombreuses manières pour implémenter des bus privés. Le dispositif illustré à la Figure 1 comprend des bus de lecture privés BBR et des bus d'écriture privés BBW. D'autres implémentations peuvent comprendre des bus bidirectionnels privés. Dans une telle implémentation, un processeur peut lire des données d'une mémoire collective et écrire des données dans une mémoire collective a travers un bus bidirectionnel prive. Un tel bus bidirectionnel transférera un flux de données à écrire et un flux de données lues, les deux flux tante sensiblement réguliers et entrelacés.

Il existe de nombreuses manières pour implémenter une mémoire d'interface. La mémoire d'interface INT illustré à la Figure 4 gère l'accès à la mémoire collective au moyen d'un arbitrage. D'autres implémentations peuvent gérer l'accès à une mémoire collective à partir d'un schéma fixe. Le schéma fixe peut être un modèle d'accès répétitif (en anglais: repetitive access pattern) comprenant au moins un intervalle de temps (en anglais: time-slots) pour chaque processeur.

Il existe de nombreuses manières pour implémenter des fonctions au moyen d'articles physiques (en anglais: items of hardware) ou de logiciels (en anglais: software) ou d'une combinaison des deux. A cet égard, les figures sont très schématiques, chaque figure représentant un mode de réalisation seulement. Donc, bien qu'une figure montre différentes fonctions sous forme de blocs séparés, ceci n'exclut pas du tout qu'un seul article physique ou logiciel effectue plusieurs fonctions. Ceci n'exclut nullement qu'une fonction puisse être effectuée par un ensemble d'articles physiques ou de logiciels.

Par exemple, l'interface mémoire illustrée à la Figure 4 comprend différents blocs qui, en combinaison, contrôlent l'accès à la mémoire collective et qui contrôlent les mémoires comprises dans l'interface mémoire. En principe, il est possible d'implémenter ces blocs au moyen d'un circuit d'ordinateur convenablement programmé. Un jeu d'instructions contenu dans une mémoire de programmation peut provoquer le circuit d'ordinateur à effectuer les différentes opérations décrites précédemment en référence aux Figures 1-9. Le jeu d'instructions peut être chargé dans la mémoire de programmation par la lecture d'un support de données comme, par exemple, un disque qui contient le jeu d'instructions. La lecture peut s'effecteur par l'intermédiaire d'un réseau de communication comme, par exemple, l'internet. Dans cas, un fournisseur de service (en anglais: service provider) mettra le jeu d'instructions à la disposition des intéressées.

Le mot "comprenant" n'exclut pas la présence d'autres éléments ou étapes listés dans une revendication.

## Revendications

1. Dispositif de traitement de données comprenant plusieurs processeurs agencés pour coopérer avec une mémoire collective, **caractérisé en ce que** le dispositif de traitement de données comprend:
- des bus privés, un bus privé permettant un transfert de données exclusivement entre un processeur et la mémoire collective; et
- une interface mémoire pour permettre l'accès à la mémoire collective en rafales de données tandis qu'elle produit des flux des données sensiblement réguliers sur les bus privés ayant une bande passante relativement faible.

2. Dispositif de traitement de données selon la revendication 1, **caractérisé en ce que** l'interface mémoire comprend:
- une mémoire tampon collective; et
- un dispositif de contrôle pour gérer des zones dans la mémoire collective appartenant à différents processeurs.

3. Dispositif de traitement de données selon la revendication 2, **caractérise en ce que** l'interface mémoire comprend un arbitre pour gérer des accès à la mémoire de tampon collective.

4. Méthode de traitement de données au moyen de plusieurs processeurs agencés pour coopérer avec une mémoire collective via des bus privés, **caractérisée en ce qu'**un bus privé permette un transfert de données exclusivement entre un processeur et la mémoire collective, la méthode comprenant l'étape de:
- permettre l'accès à la mémoire collective en rafales de données tandis qu'elle produit des flux des données sensiblement réguliers sur les bus privés ayant une bande passante relativement faible.

5. Produit "programme d'ordinateur" pour un dispositif de traitement de données comprenant plusieurs processeurs agencés pour coopérer avec une mémoire collective via des bus privés, le produit "programme d'ordinateur" étant **caractérisé en ce qu'**il comprend un jeu d'instructions qui, quand il est chargé dans le dispositif de traitement de données, amène l'interface mémoire à permettre l'accès à la mémoire collective en rafales de données tandis qu'elle produit des flux des données sensiblement réguliers sur les bus privés ayant une bande passante relativement faible.

## Patentansprüche

1. Datenverarbeitungsvorrichtung mit mehreren Prozessoren, angeordnet, um zusammen mit einem gemeinsamen Speicher zu arbeiten, **dadurch gekennzeichnet, dass** die Datenverarbeitungsvorrichtung einschließt:
- private Busse, wobei ein privater Bus es ermöglicht, Daten ausschließlich zwischen einem Prozessor und dem gemeinsamen Speicher zu übertragen; und
- eine Speicherschnittstelle, um den Zugriff auf den gemeinsamen Speicher in Datensalven zu ermöglichen, während sie an den privaten Bussen mit Bandbreiten, deren Größe den jeweils betroffenen Prozessoren angepasst sind, weitgehend regelmäßige Datenflüsse erzeugt.

2. Datenverarbeitungsvorrichtung nach Anspruch 1, **dadurch gekennzeichnet, dass** die Speicherschnittstelle einschließt:
- einen gemeinsamen Pufferspeicher; und
- eine Steuervorrichtung zum Verwalten der Bereiche im gemeinsamen Speicher, die zu verschiedenen Prozessoren gehören.

3. Datenverarbeitungsmethode nach Anspruch 2, **dadurch gekennzeichnet, dass** die Speicherschnittstelle einen Arbitrator einschließt, um den Zugriff auf den gemeinsamen Pufferspeicher zu verwalten.

4. Datenverarbeitungsmethode mit mehreren Prozessoren, angeordnet, um über private Busse zusammen mit einem gemeinsamen Speicher zu arbeiten, **dadurch gekennzeichnet, dass** ein privater Bus eine Datenübertragung ausschließlich zwischen einem Prozessor und dem gemeinsamen Speicher ermöglicht, wobei die Methode den Schritt enthält um:
- den Zugriff auf den gemeinsamen Speicher in Datensalven zu ermöglichen, während sie an den privaten Bussen mit Bandbreiten, deren Größe den jeweils betroffenen Prozessoren angepasst sind, weitgehend regelmäßige Datenflüsse erzeugt.

5. "Computerprogrammprodukt" für eine Datenverarbeitungsvorrichtung mit mehreren Prozessoren, angeordnet, um über private Busse zusammen mit einem gemeinsamen Speicher zu arbeiten, wobei das "Computerprogrammprodukt" **dadurch gekennzeichnet ist, dass** es einen Anweisungssatz enthält, der, wenn er in die Datenverarbeitungsvorrichtung geladen ist, die Speicherschnittstelle dazu veranlasst, den Zugriff auf den gemeinsamen Speicher in Datensalven zu ermöglichen, während sie an den privaten Bussen mit Bandbreiten, deren Größe den jeweils betroffenen Prozessoren angepasst sind, weitgehend regelmäßige Datenflüsse erzeugt.

## Claims

1. A data processing device comprising a plurality of processors arranged to cooperate with a collective memory, **characterized in that** the data processing device comprises:
- private buses, a private bus enabling data communication exclusively between a processor and the collective memory; and
- a memory interface to allow access to the collective memory in data bursts while it produces substantially steady data streams on the private buses having pass bands with widths adapted in accordance with the processors involved.

2. A data processing device as claimed in claim 1, **characterized in that** the memory interface comprises:
- a collective buffer memory; and
- a control device for controlling zones in the collective memory which belong to different processors.

3. A data processing device as claimed in claim 2, **characterized in that** the memory interface comprises an arbiter for controlling the access to the collective buffer memory.

4. A method of data processing by means of a plurality of processors arranged to cooperate with a collective memory via private buses, **characterized in that** a private bus enables data communication exclusively between a processor and the collective memory; the method comprising the step of:
- providing access to the collective memory in data bursts while substantially steady data streams are produced on the private buses having pass bands with widths adapted in accordance with the processors involved.

5. A "computer program" product for a data processing device comprising a plurality of processors arranged to cooperate with a collective memory via private buses, the "computer program" product being **characterized in that** it comprises a set of instructions which, when loaded into the data processing device, causes the memory interface to provide access to the collective memory in data bursts while it produces substantially steady data streams on the private buses having pass bands with widths adapted in accordance with the processors involved.
